# DEMANDE DE BREVET EUROPEEN

(11) **EP 1 241 449 A1**
(43) Date de publication de la demande: **18.09.2002**
(21) Numéro de dépôt: 02354043.8
(22) Date de dépôt: 13.03.2002
(51) Int. Cl.: G01D 5/241, G06K 9/00

(54) **Microcapteur capacitif**

(30) Priorité: 14.03.2001 FR 0103471
(71) Demandeur: STMicroelectronics S.A., 92120 Montrouge (FR)
(72) Inventeur: Pezzani, Robert, 37210 Vouvray (FR)
(74) Mandataire: de Beaumont, Michel

(57) **Abrégé**

L'invention concerne un microcapteur capacitif formé sur une plaquette (19), comprenant une zone conductrice de détection (4) disposée sur une première face ou face avant de la plaquette ; un via conducteur (21) traversant la plaquette et débouchant sur ladite zone ; et un moyen de reprise de contact (22, 23) avec ledit via sur la deuxième face ou face arrière de la plaquette. Le substrat est en silicium, les parois internes du via et les surfaces du substrat (19) étant oxydées.

## Description

La présente invention concerne un microcapteur capacitif statique permettant notamment de déterminer une variation de distance entre ce microcapteur et une surface chargée présentant un mouvement relatif par rapport à ce microcapteur.

La présente invention s'applique notamment à la réalisation d'un détecteur d'empreintes digitales.

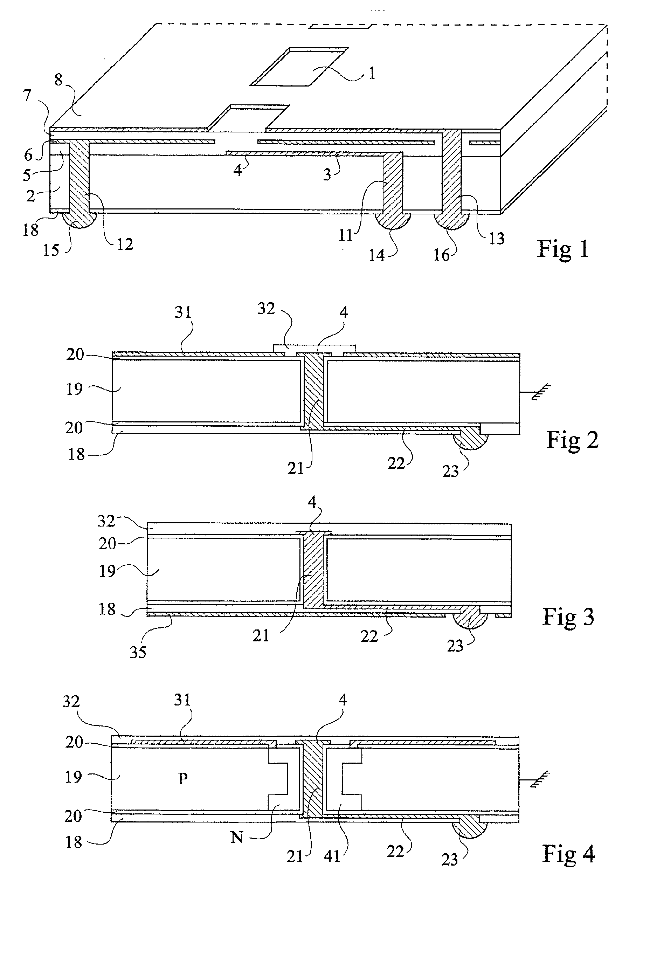

La figure 1 représente un microcapteur capacitif classique permettant notamment la détection d'empreintes. Ce microcapteur comprend un ensemble de sites de détection 1 disposés selon une ou plusieurs rangées. Ce microcapteur est formé sur une plaquette isolante 2, par exemple en verre ou en silice ou en un matériau flexible. Sur la plaquette 2 sont formées des régions conductrices 3 dont des zones d'extrémité 4 sont situées en regard des sites de détection. Les régions conductrices 3 sont revêtues d'une couche isolante 5 au-dessus de laquelle est formée une couche conductrice 6 comportant des fenêtres en regard des sites de détection. La couche conductrice 4 est revêtue d'une couche isolante 7 revêtue d'une couche conductrice 8 comportant également des fenêtres au niveau de chaque site de détection. Le substrat est traversé par des vias conducteurs. Des premiers vias 11 viennent contacter les régions 3, un deuxième via 12 vient contacter la couche 6 et un troisième via 13 vient contacter la couche 8. Chacun des vias se termine par un plot de connexion, respectivement 14, 15, 16. On comprendra qu'il existe une zone de détection 4 pour chaque fenêtre 1 tandis que la couche conductrice 6 est commune à l'ensemble de la structure de même que la couche conductrice 8. Eventuellement, pour des raisons pratiques, la face inférieure du substrat 2 est revêtue d'une couche isolante 18, cette couche isolante étant elle-même revêtue, éventuellement, d'une couche conductrice de blindage (non représentée) ouverte aux emplacements des plots.

Les régions 3 sont reliées à un circuit de détection par les plots 14. La couche 6 est reliée à la masse par le plot 15. La couche 8 est reliée à un générateur de haute fréquence par le plot 16. Ainsi, quand une surface isolante, par exemple un doigt, est déplacée par rapport à la rangée de microcapteurs 1, cette surface est chargée par le signal haute fréquence, et la capacité entre la partie de la surface passant au-dessus d'une zone de détection et cette zone de détection varie en fonction de la distance entre la portion de la surface passant au-dessus de la zone de détection (creux ou relief d'une empreinte digitale) et cette zone. On peut ainsi détecter, à l'emplacement de chaque zone de détection, les reliefs successifs d'une empreinte digitale. Divers moyens sont connus dans la technique pour réaliser les mesures. Certains de ces moyens sont décrits dans la demande de brevet européen 1058531 de la société Idex AS.

La présente invention vise à améliorer la sensibilité de ce type de microcapteur capacitif.

Un autre objet de la présente invention est de prévoir un microcapteur capacitif intégrable avec divers composants électroniques.

Pour atteindre ces objets, la présente invention prévoit un microcapteur capacitif formé sur une plaquette, comprenant une zone conductrice de détection disposée sur une première face ou face avant de la plaquette ; un via conducteur traversant la plaquette et débouchant sur ladite zone ; et un moyen de reprise de contact avec ledit via sur la deuxième face ou face arrière de la plaquette, dans lequel le substrat est en silicium, les parois internes du via et les surfaces du substrat étant oxydées.

La présente invention prévoit aussi un détecteur d'empreintes digitales comprenant un ensemble de microcapteurs tels que susmentionnés.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment, est une vue en perspective partielle d'un exemple de microcapteur selon l'art antérieur ; et
les figures 2 à 4 représentent divers modes de réalisation d'un microcapteur selon la présente invention.

Comme cela est classique dans la représentation des microcomposants, les diverses figures ne sont pas tracées à l'échelle. De plus, les parties communes aux structures des diverses figures sont désignées par les mêmes références.

La présente invention se base sur une analyse du fonctionnement de la structure de la figure 1. Il apparaît que la sensibilité du microcapteur dépend essentiellement de la distance entre la surface à détecter et le sommet de la zone de détection 4. Cette distance est fixée par les épaisseurs des couches isolantes 5 et 7. Réduire excessivement ces épaisseurs rend la structure trop fragile ou irréalisable. Ainsi, l'inventeur a analysé plus en détail la structure et notamment la raison d'être de la couche de blindage 6 reliée à la masse. La fonction essentielle de cette couche 6 est d'éviter toute interférence entre les hautes fréquences sur l'électrode supérieure 8 et l'électrode de détection 4 et surtout le conducteur 3 relié à cette électrode de détection.

Plutôt que de modifier la structure de l'électrode de blindage 6, la présente invention propose de modifier le mode de raccordement de la zone de détection 4 pour éviter la nécessité de l'électrode de blindage.

La figure 2 illustre un premier mode de réalisation de la présente invention. Le substrat est un substrat de silicium 19 dopé et donc conducteur et est connecté à la masse. Le via destiné à venir en contact avec la zone de détection 4 est disposé directement sous cette zone. Avant la formation de la couche conductrice de via dans une ouverture disposée sous la zone de détection 4, l'ensemble de la structure est oxydé pour isoler le silicium 19. Le via est désigné par la référence 21. S'il faut déporter le plot de contact sur la face inférieure, il est prévu une couche conductrice 22 du côté de la face inférieure s'étendant jusque vers un plot de connexion 23. L'électrode recevant une haute fréquence, ou métallisation de polarisation, désignée par la référence 31, est gravée dans la même couche conductrice que la zone de détection 4. Une couche isolante 32 recouvre au moins la zone de détection 4. En raison de la grande épaisseur de la plaquette 19, par exemple de l'ordre de 0,3 à 0,5 mm, par rapport à l'épaisseur d'une couche isolante, le couplage entre l'électrode supérieure 31 et la connexion 22 est négligeable. On peut donc se passer de l'électrode de blindage 6. Ainsi, il existe une seule épaisseur de couche isolante, 20, entre le substrat et l'électrode supérieure 31, cette couche ayant pour fonction d'isoler la zone 4 de la surface, par exemple un doigt, à analyser. La connexion à la masse du substrat permet d'éviter tout couplage parasite entre la l'électrode supérieure 31 et les autres couches conductrices de la structure.

La figure 3 représente un deuxième mode de réalisation de la présente invention. Dans ce mode de réalisation, la métallisation de polarisation 31 est supprimée. La polarisation de la surface à analyser est réalisée par un contact avec une partie de la surface à analyser externe à la zone des capteurs. Par exemple, si on veut analyser l'empreinte digitale d'un doigt, une tension haute fréquence sera appliquée à un autre doigt. On a également représenté en figure 3, du côté de la face arrière, une couche conductrice de blindage 35 qui est de préférence connectée à la masse.

La figure 4 représente un troisième mode de réalisation de la présente invention réalisé à partir d'un substrat 19 en silicium d'un premier type de conductivité, par exemple P. Ce substrat est d'abord percé d'ouvertures situées aux emplacements des vias à former. Un dopage de type opposé est réalisé par diffusion au voisinage des ouvertures, la zone dopée 41 s'étendant au-delà des zones de détection 4, jusqu'à s'étendre partiellement sous une métallisation de polarisation 31. Comme dans le mode de réalisation de la figure 2, la métallisation de polarisation haute fréquence 31 et les zones de détection 4 sont formées à partir d'une même couche conductrice. (Comme en figure 2, le via de contact avec la métallisation 31 n'est pas représenté) . Les surfaces supérieure et inférieure du substrat ainsi que les parois des vias sont revêtues d'une mince couche isolante 20, par exemple par oxydation thermique pour isoler les diverses couches conductrices du substrat. La couche isolante 20 est ouverte, par exemple annulairement, en regard d'une portion de l'extension latérale de la région du type N 41 de sorte que la métallisation 31 est en contact avec cette région. La métallisation 31 est connectée comme précédemment à un générateur haute fréquence mais la tension qui lui est appliquée comporte également une tension de polarisation continue positive pour polariser en inverse la jonction NP 41-19. Le substrat 19 étant relié à la masse, on obtient ainsi une protection intégrée contre d'éventuelles surtensions. D'autre part, on limite le couplage parasite entre le conducteur du via 21 et le substrat du fait de la polarisation positive de la région N. Cette polarisation peut par exemple être de l'ordre de 2 à 3 volts.

L'homme de l'art saura réaliser les divers modes de réalisation de la présente invention en utilisant les divers matériaux couramment utilisés dans le domaine de la fabrication des semiconducteurs. Les couches conductrices de polarisation et de détection seront par exemple des couches de silicium polycristallin dopé ou d'un métal tel que de l'aluminium ou autre métal connu pour réaliser des métallisations. Les couches isolantes du côté de la surface supérieure seront par exemple des couches d'oxyde et/ou de nitrure de silicium ou autre isolant classique. Les couches d'isolement du côté de la face inférieure seront par exemple des couches d'oxyde de silicium ou des couches de polymères. Les épaisseurs des couches seront par exemple de l'ordre de 0,1 à 0,2 µm pour les couches isolantes et de l'ordre de 0,1 à 2 µm pour les couches conductrices.

La présente invention est susceptible de diverses variantes et modifications qui apparaîtront à l'homme de l'art. Divers moyens autres que des vias pourront par exemple être utilisés pour assurer un contact avec la couche conductrice de polarisation. Les caractéristiques illustrées dans les diverses figures pourront éventuellement être combinées, par exemple la couche de blindage 35 représentée en figure 3 du côté de la face inférieure pourrait être utilisée dans les divers modes de réalisation. De plus, divers composants électroniques actifs ou passifs pourront être réalisés sur ou dans le substrat de silicium 19. En outre, bien que l'on ait décrit un substrat de silicium, il pourrait s'agir d'un substrat de type silicium sur isolant.

## Revendications

1. Microcapteur capacitif formé sur une plaquette (19), comprenant :
une zone conductrice de détection (4) disposée sur une première face ou face avant de la plaquette ;
un via conducteur (21) traversant la plaquette et débouchant sur ladite zone de détection ; et
un moyen de reprise de contact (22, 23) avec ledit via sur la deuxième face ou face arrière de la plaquette,
dans lequel le substrat est en silicium, les parois internes du via et les surfaces du substrat (19) étant oxydées.

2. Microcapteur selon la revendication 1, dans lequel la zone conductrice de détection (4) est entourée d'une électrode de polarisation haute fréquence (31), la zone conductrice de détection (4) et une partie au moins de l'électrode de polarisation (31) étant recouvertes d'une couche isolante (32).

3. Microcapteur selon la revendication 1, comprenant uniquement un ensemble de zones conductrices de détection (4), la polarisation d'une surface à détecter étant assurée par ailleurs.

4. Microcapteur selon la revendication 1, dans lequel le substrat est connecté à la masse et la paroi latérale du via correspondant à la zone de détection est entourée d'une zone semiconductrice (41) de type opposé à celle du substrat (19), une électrode de polarisation étant connectée à ladite zone semiconductrice (41) par l'intermédiaire d'une ouverture formée dans la couche d'oxyde (20) disposée au-dessus du substrat semiconducteur.

5. Détecteur d'empreintes, **caractérisé en ce qu'**il comprend un ensemble de microcapteurs selon l'une quelconque des revendications 1 à 4.
